# EUROPEAN PATENT SPECIFICATION

(11) **EP 1 811 333 B1**
(45) Date of publication and mention of the grant of the patent: **27.12.2017**
(21) Application number: 05721284.7
(22) Date of filing: 23.03.2005
(51) Int. Cl.: G03B 21/26, G02B 26/00, G02B 26/08, G03B 33/08, H04N 9/31, G03B 21/00

(54) **PROJECTOR**
PROJEKTOR
PROJECTEUR

(30) Priority: 03.09.2004 JP 2004257638
(43) Date of publication of application: 25.07.2007
(73) Proprietor: Sharp Kabushiki Kaisha, Osaka-shi, Osaka 545-8522 (JP)
(72) Inventor: WATANABE, Takefumi, Shimotsuga-gun Tochigi 321-0211 (JP); SASANUMA, Yoshio, Kawachi-gun Tochigi 329-1105 (JP)
(74) Representative: Treeby, Philip David William
(86) International application number: PCT/JP2005/005184
(87) International publication number: WO 2006/027866

(56) References cited:
- JP-A- 2003 263 902
- JP-A- 2004 101 722
- JP-A- 2004 212 890
- JP-A- 2004 526 992
- US-A- 5 706 061

## Description

### [Field of Industrial Application]

The present invention relates to a projector which separates light emitted from a light source by a rotary color filter, which includes transmittance filter segments for plural colors, into the respective colors, projects the same to spatial optical modulating means such as a DMD (Digital Micromirror Device) and performs spatial optical modulation based on image data regarding the respective colors given to the DMD, thereby projecting a color image.

### [Background Art]

In the field of presentation or image projection, a projector is used which projects, to an external screen or the like, an image based on image data inputted from a computer or various types of a picture reproducing apparatus. Such a projector is configured so that it generates modulated light representing an image obtained by modulating the light from an internal light source based on the image data and projects the modulated light thus generated to an external screen, etc by giving image data to spatial optical modulating, specifically a liquid crystal panel, a DMD (Digital Micromirror Device) or the like,.

By the way, for a projector as that described above, there are a method for projecting a color image by time-divided projecting light in plural colors of R (red), G (green) and B (blue), and when necessary, white light upon one plate-like spatial optical modulating means, and a method for projecting a color image by projecting light in plural colors of R (red), G (green) and B (blue) upon, in general, three plate-like spatial optical modulating means, respectively to generate modulated light of the respective colors, and by composing them.

The former method is generally referred to as a "single plate type method". A conventional configuration of the single plate type method, uses a rotary color filter which rotates transmittance filter segments for transmitting light of the respective chromatic colors (R, G, B), and when necessary, white light, separates emitted light from a light source into the respective chromatic colors and when necessary the white color, and gives the same to spatial optical modulating means.

By the way, with respect to a single plate type projector as that described above, it is necessary that transmittance filter segments for transmitting light of three or four colors are arranged in a rotary color filter and rotated in synchronization with the modulation cycle (cycle in which the respective color components of image data are given to spatial optical modulating means) of the spatial optical modulating means. Hence, where four colors including the white color are to be used for example, quadrisections in a simple allocation, namely, 90 degrees are allocated to the respective color filters in the rotary color filter. This has led to the actual situation that correction for each color of the reproducibility, the color temperature or the like of an image projected after modulated by the spatial optical modulating means must be dependent upon the duration of an image display signal within the 90 degrees range of the rotary color filter.

Nevertheless, since the brightness of a projected image is the priority in the case of a projector applied to displaying of a monitor screen of a computer principally as is, namely, a data projector, a rotary color filter includes a filter segment for transmitting white light whose angle is relatively larger than those of the other colors, thereby brightening an image projected by the spatial optical modulating means. This however of course minimizes the filter segments for transmitting the respective color light other than white light, consequently reduces the quantity of the respective color light other than white light and ends up in a failure of attaining a favorable color reproducibility.

As described earlier, a conventional resolution to this situation is extension of the duration of an image display signal within the ranges of angle allotted to the respective colors on the rotary color filter. However, it is principally impossible to elongate the image display signal for each color beyond a duration which corresponds to the angle allotted to each filter segment for transmitting light of each color. When the duration of the image display signal is extended within the range of angle allotted to the white color on the rotary color filter for the sake of placing high priority upon the color reproducibility and the color temperature, the brightness of an image projected by the spatial optical modulating means will of course become low.

In such circumferences, Patent Document 1 discloses the invention according to which a rotary color filter is partitioned into plural concentric ring-like sections, angles allotted to each of filter segments for transmitting light of the respective colors in the respective ring sections are different from each other, and the center of rotation of such rotary color filter is displaced parallel along a direction intersecting emitted light from a light source. The invention disclosed in Patent Document 1 substantially realizes a configuration that as the center of rotation of one rotary color filter is displaced, plural types of rotary color filters in which the angles allotted to the filter segments for transmitting light of the respective colors are different from each other, that is, plural types of rotary color filters having different color reproducibility and color temperatures from each other are each used for the purpose of using a projector. The invention disclosed in Patent Document 1 further makes it easy to use the rotary color filters for the colors when a color image is to be projected but a high-brightness monochrome rotary color filter for projecting a monochrome image such as a document which is data created by a computer.

A light source of a projector may be a lamp of a direct-current drive type as that described in Patent Document 2 which superimposes a pulse current upon an applied direct current, i.e., which increases the value of the applied direct current, to thereby increase the quantity of emitted light from the lamp, or may be a lamp of an alternating-current drive type as those described in Patent Documents 3 and 4 which inverts the phase of a direct current value at particular intervals.
[Patent Document 1]
   Japanese Patent Application Laid-Open No. 2003-307705
[Patent Document 2]
   Japanese Patent Application Laid-Open No. 2004-212890
[Patent Document 3]
   Japanese Patent Application Laid-Open No. 2002-533884
[Patent Document 4]
   Japanese Patent Application Laid-Open No. 2002-534766

### Disclosure of the invention

### Problems to be solved by the invention

The invention disclosed in Patent Document 1 described above however merely permits selection of one type from among a predetermined number of types of rotary colour filters given as concentric ring sections in one rotary colour filter but does not allow adjustment to desire colour reproducibility or colour temperature, has the drawback that the diameter of the rotary colour filter is inevitably large so that the apparatus as a whole is large-sized, and in addition gives rise to a problem that although it may be possible to switch during continuous projection image, the switching inevitably accompanies a time lag.

As described above, a conventional single plate type projector which uses a rotary colour filter finds a trade-off relation between the brightness, and the color reproducibility and the color temperature of an image projected by the spatial optical modulating means, thus demanding one to compromise at a certain point.

Further, the lamps described in Japanese Patent Application Laid-Open No. 2004-212890, Japanese Patent Application Laid-Open No. 2002-533884 and Japanese Patent Application Laid-Open No. 2002-534766 are all high-pressure mercury lamps whose spectral characteristics of the emitted light is unbalanced in a period from they turn on until they become in a stable state as compared with being a stable state, and the quantity of emitted light gradually increases, and hence, there is a problem that the color reproducibility of a projected image in a particular color remains poor and the image is dark. Conventional projectors are disclosed in US 5,706,061 and JP 2004 212890 and WO 02/063391 A1.

### BRIEF SUMMARY OF THE INVENTION

The present invention has been made against such circumstances, and accordingly, a main object of the present invention is to provide a projector capable of eliminating the trade-off relation, existing in a conventional single plate type projector using a rotary color filter, between the brightness, and the color reproducibility and the color temperature of an image projected from spatial optical modulating means.

Other object of the present invention is to provide a projector capable of arbitrarily adjusting the respective colors, or arbitrarily adjusting the brightness in addition to respective colors.

A further object of the present invention is to provide a projector capable of setting predetermined values for the respective colors, or setting the brightness in addition to respective colors in accordance with the type of a projected image, and selecting any one from among these.

A still further object of the present invention is to provide a projector capable of solving the problems of the prior arts that the color reproducibility in a particular color is poor and an image is dark until a light source has become in a stable state since turning on.

In brief, the projector according to the present invention is configured so as to use as a light source, a lamp of the direct-current drive type as that described in Japanese Patent Application Laid-Open No. 2004-212890 which superimposes a pulse current upon an applied direct current, i.e., which increases the value of the applied direct current, to thereby increase the quantity of light in a particular color emitted from the lamp, increases the quantity of emitted light from the lamp which is the light source, and accordingly increases the brightness of the particular color in the projected image. A lamp of the alternating-current drive type as those described in Japanese Patent Application Laid-Open No. 2002-533884 and Japanese Patent Application Laid-Open No. 2002-534766 may nevertheless be used.

According to the present invention there is provided a projector as defined in independent claim 1. In the projector according to the present invention described above, since the quantity of emitted light from the light source increases while the light is transmitted through filter segments of the rotary color filter for transmitting at least two colors among plural chromatic colors, and therefore, the quantity of the light in these colors increases.

Further, the projector according to the present invention is a projector comprising: a light source that emits white light; spatial optical modulating means for converting emitted light from said modulating means; and is characterized by comprising: light source driving means having a function for changing the quantity of emitted light from said light source; and controlling means for controlling said light source driving means so as to increase the quantity of emitted light from said light source during each of periods in which light from said light source is transmitted through filter segments for transmitting light of at least two colors among said filter segments respectively for transmitting light of said plural chromatic colors.

In the projector according to the present invention described above, since the quantity of emitted light from the light source increases while the light is transmitted through filter segments of the rotary color filter for transmitting at least two colors among plural chromatic colors, and therefore, the quantity of the light in these colors increases.

Further, the projector according to the present invention is a projector comprising: a light source that emits white light; spatial optical modulating means for converting emitted light from said light source into modulated light that expresses an image; and a rotary color filter that has a rotary region where filter segments respectively for transmitting white light and light of plural chromatic colors are arranged, and separates emitted light from said light source into white color and said plural chromatic colors by rotating said rotary region interposed between said light source and said spatial optical modulating means; characterized by comprising: light source driving means having a function for changing the quantity of emitted light from said light source; and controlling means for controlling said light source driving means so as to increase the quantity of emitted light from said light source during a period in which light from said light source is transmitted through one filter segment for transmitting light of at least one color among said filter segments respectively for transmitting light of said plural chromatic colors.

In the projector according to the present invention described above, since the quantity of emitted light from the light source increases while the light is transmitted through the filter segment of the rotary color filter for transmitting at least one color among the plural colors including white color, an increase of the quantity of emitted light from the light source during transmission through the filter segment for transmitting white light increases the quantity of light of an entire image, i.e., increases the brightness of the entire image, and an increase of the quantity of emitted light from the light source during transmission through the filter segment for transmitting light of any other color increases the quantity of light of that color, i.e., increases the brightness of that color.

In any one of the two inventions described above, the projector according to the present invention is characterized in that said controlling means is configured so as to be able to change an increase of the quantity of emitted light from said light source.

In the projector according to the present invention in any one of the two inventions described above, an increase of the quantity of emitted light from the light source can be arbitrarily changed.

Further, in any one of the two inventions described above, the projector according to the present invention is characterized in that said controlling means is configured so as to be able to change a period in which the quantity of emitted light from said light source is increased.

In the projector according to the present invention in any one of the two inventions described above, a period in which the quantity of emitted light from the light source increases can be arbitrarily changed.

Further, in any one of the respective inventions described above, the projector according to the present invention is characterized in that said plural chromatic colors are red, green and blue.

In the projector according to the present invention in any one of the respective inventions described above, in a configuration having the filter segment for transmitting white light, the brightness of an entire image increases when the quantity of emitted light from the light source increases during transmission through the filter segment for transmitting white light, but the quantity of light in at least one color among red, green and blue increases when the quantity of emitted light from the light source increases during transmission through the filter segment for transmitting light of any other color.

Further, in any one of the respective inventions described above, the projector according to the present invention is characterized in that said plural chromatic colors are cyan, magenta and yellow.

In the projector according to the present invention in any one of the respective inventions described above, in a configuration having the filter segment for transmitting white light, the brightness of an entire image increases when the quantity of emitted light from the light source increases during transmission through the filter segment for transmitting white light, but the quantity of light in at least one color among cyan, magenta and yellow increases when the quantity of emitted light from the light source increases during transmission through the filter segment for transmitting light of any other color.

Further, in any one of the respective inventions described above, the projector according to the present invention is characterized in that said plural chromatic colors are red, green, blue, cyan, magenta and yellow.

In the projector according to the present invention in any one of the respective inventions described above, in a configuration having the filter segment for transmitting white light, the brightness of an entire image increases when the quantity of emitted light from the light source increases during transmission through the filter segment for transmitting white light, but the quantity of light in at least one color among red, green, blue, cyan, magenta and yellow increases when the quantity of emitted light from the light source increases during transmission through the filter segment for transmitting light of any other color.

Further, in any one of the respective inventions described above, the projector according to the present invention is characterized in that said plural chromatic colors are red, green, blue, cyan and/or magenta and/or yellow.

In the projector according to the present invention in any one of the respective inventions described above, in a configuration having the filter segment for transmitting white light, the brightness of an entire image increases when the quantity of emitted light from the light source increases during transmission through the filter segment for transmitting white light, but the quantity of light in one color, two colors or three colors among red, green, blue, cyan, magenta and yellow increases when the quantity of emitted light from the light source increases during transmission through the filter segment for transmitting light of any other color.

Further, the projector according to the present invention is a projector comprising: a light source that emits white light; spatial optical modulating means for converting emitted light from said light source into modulated light that expresses an image; and a rotary color filter that has a rotary region where filter segments respectively for transmitting white light and light of plural chromatic colors are arranged, and separates emitted light from said light source into white color and three colors of red, green and blue by rotating said rotary region interposed between said light source and said spatial optical modulating means; and is characterized by comprising: light source driving means having a function for changing the quantity of emitted light from said light source; and controlling means for selectively setting a first mode under which an increase of the quantity of emitted light from said light source transmitted through filter segments for transmitting red and green light with respect to the quantity of emitted light from said light source transmitted through a filter segment for transmitting white light is at a first ratio, and a second mode under which an increase is at a second ratio greater than said first ratio.

In the projector according to the present invention, a first mode under which an increase ratio of the quantity of emitted light from the light source is a first ratio during both periods in which the light is transmitted through the filter segments for transmitting red and green light with respect to a period in which the light is transmitted through the filter segment for transmitting white light, and a second mode under which the ratio is a second ratio greater than the first ratio can be selectively set.

Further, in the inventions described above, the projector according to the present invention is characterized in that said first ratio is 20 % or lower and said second ratio is 40 through 50 %.

In the projector according to the present invention in the inventions described above, the first mode under which increase ratios of the quantity of emitted light from the light source is 20 % or less during both periods in which the light is transmitted through the filter segments for transmitting red and green light with respect to a period in which the light is transmitted through the filter segment for transmitting white light, and a second mode under which the both ratios are 40 through 50 % can be selectively set.

Further, the projector according to the present invention is a projector comprising: a light source that emits white light; spatial optical modulating means for converting emitted light from said light source into modulated light that expresses an image; and a rotary color filter that has a rotary region where filter segments respectively for transmitting white light and light of plural chromatic colors are arranged, and separates emitted light from said light source into white color and three colors of red, green and blue by rotating said rotary region interposed between said light source and said spatial optical modulating means; and is characterized by comprising: light source driving means having a function for changing the quantity of emitted light from said light source; and controlling means for arbitrarily setting an increase of the quantity of emitted light from said light source transmitted through filter segments for transmitting light in other respective colors with respect to the quantity of emitted light from said light source transmitted through a filter segment for transmitting white light.

In the projector according to the present invention, an increase ratio of the quantity of emitted light from the light source is can be arbitrarily set for a period in which the light is transmitted through the filter segment for transmitting light in other colors with respect to a period in which the light is transmitted through the filter segment for transmitting white light.

Further, in any one of the respective inventions described above, the projector according to the present invention is characterized in that said controlling means is configured so as to increase the quantity of emitted light from said light source transmitted through filter segments for transmitting white light and light in other respective colors, by increasing the quantity of emitted light from said light source, or changing both an increase of the quantity of emitted light from said light source and a period in which the quantity of emitted light from said light source is increased.

In the projector according to the present invention in any one of the respective inventions described above, the quantity of emitted light from the light source transmitted through the filter segments for transmitting white light and light of the other colors increases, by increasing the quantity of emitted light from the light source, or changing both an increase of the quantity of emitted light from the light source and a period in which the quantity of emitted light from the light source increases.

Further, in any one of the respective inventions described above, the projector according to the present invention is characterized in that said controlling means controls said light source driving means so as to compensate the spectral characteristic of said light source which is unbalanced during a period from turning on of said light source until becoming in a stable state.

In the projector according to the present invention in any one of the respective inventions described above, the spectral characteristic of the light source is compensated even during a period, in which the spectral characteristic of the light source is unbalanced, until the spectral characteristic of the light source has become in a stable state from turning on of the light source.

Further, in any one of the respective inventions described above, the projector according to the present invention is characterized in that said controlling means controls said light source driving means so as to compensate the quantity of emitted light from said light source which gradually increases during a period from turning on of said light source until becoming in a stable state.

In the projector according to the present invention in any one of the respective inventions described above, the brightness of the light source is compensated even during a period, in which the quantity of emitted light from the light source gradually increases, until the quantity of emitted light from the light source has become in a stable state from turning on of the light source.

### [Effects of the Invention]

According to the projector of the present invention described above, irrespective of the restriction by the rotary color filter, the trade-off relation, existing in a conventional single plate type projector using a rotary color filter, between the brightness, and the color temperature and the color reproducibility of an image projected by the spatial optical modulating means is eliminated, and therefore, the color reproducibility of the projected image can be arbitrarily adjusted.

According to the projector of the present invention, irrespective of the restriction by the rotary color filter, the trade-off relation, existing in a conventional single plate type projector using a rotary color filter, between the brightness, and the color temperature and the color reproducibility of an image projected by the spatial optical modulating means is eliminated, and therefore, not only the color reproducibility of the projected image but the brightness of the projected image can be arbitrarily adjusted.

According to the projector of the present invention in any one of the two inventions described above, by changing an increase of the quantity of emitted light from the light source, the color reproducibility can be improved because the quantity of light in a particular color of a projected image increases.

According to the projector of the present invention in any one of the two inventions described above, by changing a period in which the quantity of emitted light from the light source increases, the color reproducibility can be improved because the quantity of light in a particular color of a projected image increases.

Further, according to the projector of the present invention in any one of the respective inventions described above, it makes possible to increase the brightness of an entire image, and to increase the quantity of light in at least one color among red, green and blue, and hence, the color reproducibility can be improved.

Further, according to the projector of the present invention in any one of the respective inventions described above, it makes possible to increase the brightness of an entire image, and to increase the quantity of light in at least one color among cyan, magenta and yellow, and hence, the color reproducibility ca be improved.

Further, according to the projector of the present invention in any one of the respective inventions described above, it makes possible to increase the brightness of an entire image, and to increase the quantity of light in at least one color among red, green, blue, cyan, magenta and yellow, and hence, the color reproducibility can be improved.

Further, according to the projector of the present invention in any one of the respective inventions described above, it makes possible to increase the brightness of an entire image, and to increase the quantity of light in one color, two colors or three colors among red, green, blue, cyan, magenta and yellow, and hence, the color reproducibility can be improved.

Further, according to the projector of the present invention, the first mode under which the quantity of red light and that of green light are both increased to the first ratio in advance, or the second mode under which they are both increased to the second ratio greater than the first ratio can be selectively set, and hence, the user can obtain desired image quality of a projected image merely by selecting the first mode or the second mode without any individual adjustment for each color.

Further, according to the projector of the present invention in the inventions described above, the first mode under which the first ratio is 20 % or lower and suitable to viewing of a movie and the like, or the second mode under which the second ratio is 40 through 50 % and suitable to projection of a monitor screen of a computer for instance can be selectively set, and hence, the user can obtain a desired image quality of a projected image merely by selecting the first mode suitable to viewing of a movie and the like and the second mode suitable to projection of a monitor screen of a computer without any individual adjustment for each color.

Further, according to the projector of the present invention in the inventions above, the brightness of an entire image and the quantity of light in each color can be arbitrarily adjusted in accordance with a surrounding environment or a user's preference.

Further, according to the projector of the present invention in any one of the respective inventions described above, the brightness of entire image and the quantity of light of each color can be increased in accordance with an increase of the quantity of light emitted from the light source, or the quantity of light of emitted light from the light source transmitted through the filter segments for transmitting white light and light of the other colors can be increased in accordance with an increase of the quantity of light emitted from the light source and a period in which the quantity of emitted light from the light source is increased, and hence, the magnitude of light quantity adjustment is expanded and more dynamically adjusting of an image quality can be realized.

Further, according to the projector of the present invention in any one of the respective inventions described above, the color reproducibility can be improved even during a period in which the spectral characteristic of the light source is unbalanced from turning on of the light source until the light source has become in a stable state.

Further, according to the projector of the present invention in any one of the respective inventions described above, the brightness can be improved even during a period in which the quantity of emitted light from the light source is small from turning on of the light source until the light source has become in a stable state.

### [Brief Description of the Drawings]

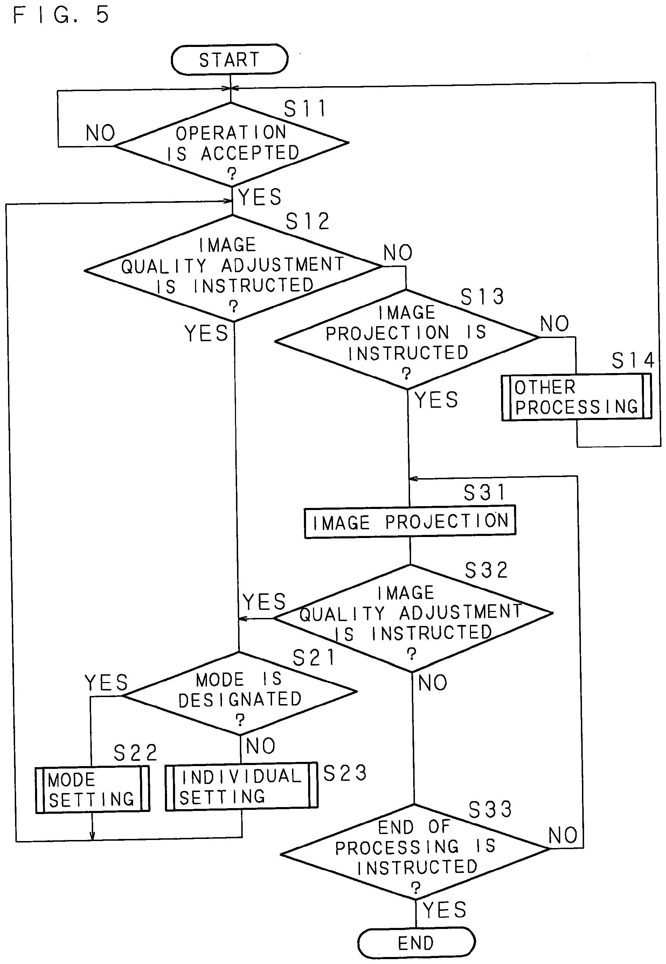

[FIG. 1]
   A schematic block diagram showing a configuration example of a projector according to an embodiment 1 of the present invention.
[FIG. 2]
   A schematic diagram showing a configuration example of a lamp drive circuit of the projector according to the embodiment 1 of the present invention.
[FIG. 3]
   A schematic plan view showing a configuration example of a rotary color filter of the projector according to the embodiment 1 of the present invention.
[FIG. 4]
   A schematic view showing the function of the rotary color filter of the projector according to the embodiment 1 of the present invention.
[FIG. 5]
   A flow chart showing a procedure of the projector according to the embodiment 1 of the present invention.
[FIG. 6]
   A flow chart of a sub routine of "MODE SETTING" shown in the flow chart in FIG. 5.
[FIG. 7]
   A schematic view of a display screen for "MODE SETTING" shown in the flow chart in FIG. 5.
[FIG. 8]
   A flow chart of a sub routine of "INDIVIDUAL SETTING" shown in the flow chart in FIG. 5.
[FIG. 9]
   A schematic view of a display screen for "INDIVIDUAL SETTING" shown in the flow chart in FIG. 5.
[FIG. 10]
   A schematic block diagram showing a configuration example of the projector according to an embodiment 2 of the present invention.
[FIG. 11]
   A schematic diagram showing a configuration example of a lamp drive circuit of the projector according to the embodiment 2 of the present invention.

### [Description of the Reference Numbers]

- 1 (101): lamp
- 2: rotary color filter
- 3: DMD
- 10 (100): control circuit
- 11 (111): lamp drive circuit
- 12: filter drive circuit
- 13: DMD drive circuit
- 14: operating section
- 21 (121): power source circuit
- 22 (122): lamp control circuit

### [Preferred Embodiments for Executing the Invention]

The present invention will now be specifically described with reference to the drawings showing the embodiments.

### [Embodiment 1]

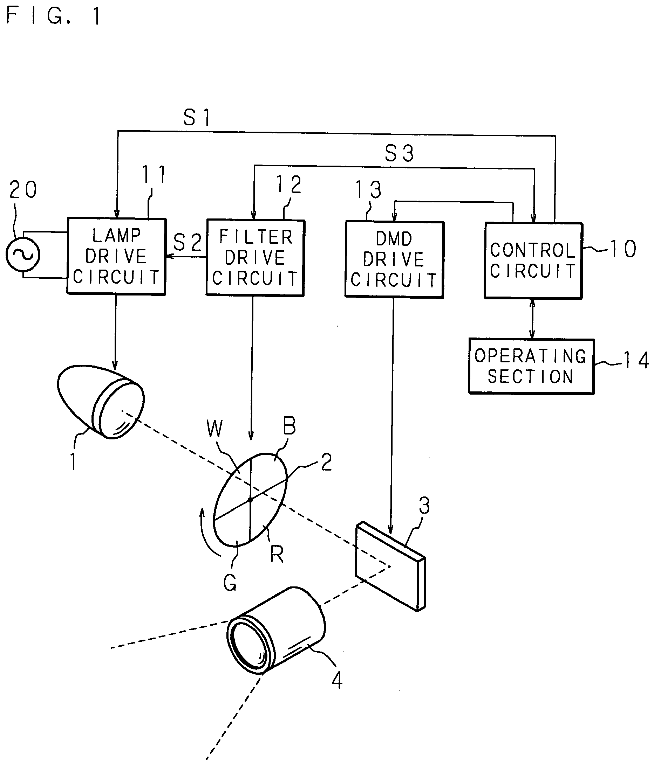

FIG. 1 is a schematic block diagram showing a configuration example of the projector according to the embodiment 1 of the present invention. This projector according to the embodiment 1 is configured by a lamp 1 which is a light source, a rotary color filter 2 in which light transmittance filter segments respectively for transmitting light in four colors in the illustrated example of white (W), blue (B), red (R) and green (G) are arranged within a rotary region, a DMD (Digital Micromirror Device) 3 as spatial optical modulating means which performs spatial optical modulation based on image data of emitted light from the lamp 1 after transmitted through any one of the filter segments of the rotary color filter 2, a projection optical system 4 formed by plural lenses for projecting modulated light modulated by the DMD 3 to an external screen or the like, a control system described later, and the like.

The projector according to the present invention is applicable to both the so-called front projection type which projects an image to an external screen or the like and the rear projection type which projects from behind a screen. Further, although the embodiment 1 comprises the DMD as spatial optical modulating means, other spatial optical modulating means such as a liquid crystal panel may of course be used. In addition, although appropriate optical systems are disposed between the lamp 1 and the rotary color filter 2 and between the rotary color filter 2 and the DMD 3, as these are not relevant directly to the present invention, they will not be described.

The control system is configured by a control circuit 10 which utilizes a microcomputer, a microprocessor, etc., a lamp drive circuit 11 which controls driving of the lamp 1 in response to settings from the control circuit 10, a filter drive circuit 12 which controls rotations of the rotary color filter 2 in the same manner, a DMD drive circuit 13 which controls the DMD 3 in the same manner, the operating section 14 through which the control circuit 10 accepts an operation instruction from a user, and the like. A display apparatus such as an LCD disposed to the operating section 14 may display various guidance, instructions and the like from the control circuit 10 to a user, or these may be given as on-screen display (OSD) under the control of the control circuit 10, or both of these may of course be exercised.

In the embodiment 1, the lamp 1 is a lamp of the direct-current drive type such that described in Patent Document 2 which superimposes a pulse current upon an applied direct current, i.e., which increases the value of the applied direct current, to thereby increase the quantity of emitted light from the lamp.

This lamp 1 emits light by applying a direct current in accordance with the settings of the control circuit 10 from the lamp drive circuit 11 connected to a commercial alternating-current power source 20. The quantity of emitted light from the lamp 1 can be by superimposing the pulse current upon the value of the current applied to the lamp 1 by the lamp drive circuit 11 in accordance with the settings of the control circuit 10.

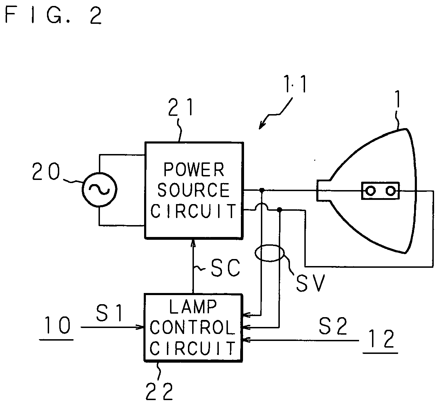

FIG. 2 is a schematic diagram showing a configuration example of the lamp drive circuit 11 of the projector according to the embodiment 1 of the present invention. A power source circuit 21 inputs commercial alternating-current power, converts it into a direct current having a predetermined current value, and applies it to the lamp 1. The applied current value from the power source circuit 21 to the lamp 1 is fed back to a lamp control circuit 22 as a signal SV and usually maintained at a constant value. Meanwhile, to the lamp control circuit 22, information for superimposing the pulse current upon the direct current applied to the lamp 1 by the power source circuit 21 is given by a control signal S1 from the control circuit 10. This information sets both the size of the pulse current (current value) and the duration of the pulse current, and also sets the timing of superimposition.

The lamp control circuit 22 is further given, as a signal S2, information which indicates the state of rotation of the rotary color filter 2, that is, where the filter segment for transmitting light of which color is located, from the filter drive circuit 12. The signal S2 is also given to the control circuit 10 as a signal S3 shown in FIG. 1. The signal S3 given to the control circuit 10 is utilized for timing control of the control signal S1 which is given from the control circuit 10 to the lamp drive circuit 11. Since the lamp control circuit 22 knows the timing at which each filter segment of the rotary color filter 2 transmits emitted light from the lamp control circuit 22, the timing of actually applying the pulse current is determined from the relationship between this timing and the timing set by the control signal S1 given from the control circuit 10.

Based on the above, the lamp control circuit 22 gives a control signal SC to the power source circuit 21, in accordance with the information set by the control signal S1 from the control circuit 10 and the timing given from the filter drive circuit 12 as the signal S2. By the fact that this control signal SC is being given, the pulses having the current value designated by the control signal SC is superimposed upon the current applied to the lamp 1 from the power source circuit 21 during a period designated by the control signal SC, and therefore, the current value given to the lamp 1 accordingly increases, as a result the quantity of emitted light from the lamp 1 increases.

When the projector according to the embodiment 1 of the present invention operates, the rotary color filter 2, driven by the filter drive circuit 12 which includes an actuator not shown, rotates at a constant velocity in the direction of an arrow under the control of the control circuit 10. As described in detail later, in the embodiment 1, to the rotary color filter 2, the filter segments for transmitting light of the four colors of white (W), blue (B), red (R) and green (G) are allotted each by about 90 degrees, and the rotary color filter 2 separates the emitted light from the lamp 1 into above mentioned four colors in a time-divided fashion and gives them to the DMD 3. The filter drive circuit 12 comprises means for detecting rotational position of the rotary color filter 2. Therefore, at each time point, the lamp control circuit 22 knows that the filter segment for transmitting light of which color transmits the emitted light from the lamp 1 to the DMD 3.

Under the control of the control circuit 10, the DMD 3 modulates the light transmitted through the rotary color filter 2 and projects the light toward the projection optical system 4 in accordance with digital image data given from image data supplying means, not shown, such as a computer, a DVD player, a TV tuner or the like. While illustrated as an optical system for the front projection type in the illustrated example, the projection optical system 4 may be an optical system for the rear projection type. Further, of course, the projection optical system 4 as well allows zoom adjustment, key-stone adjustment and the like under the control of the control circuit 10.

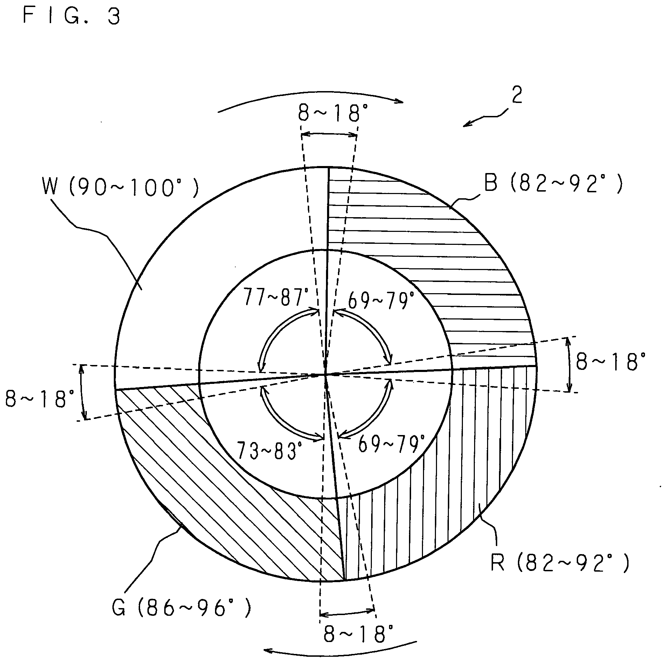

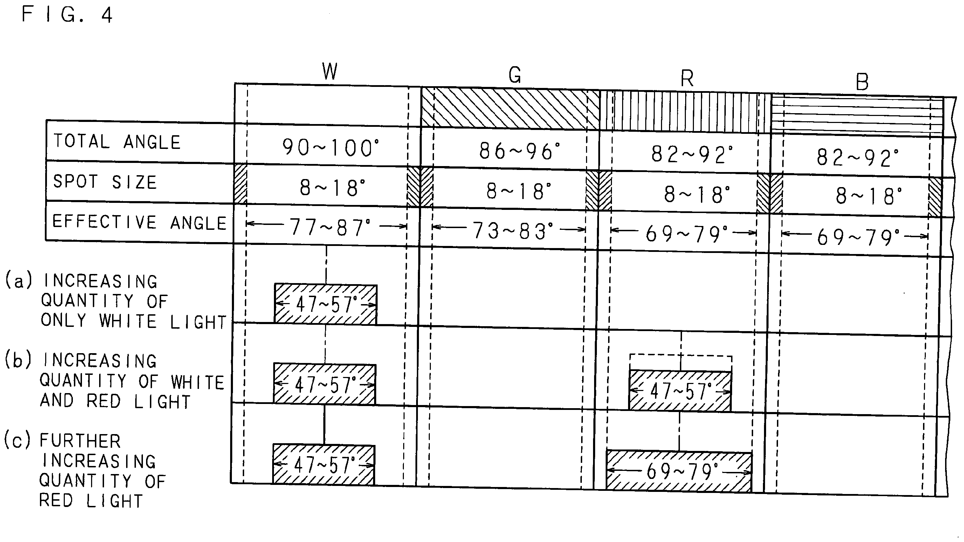

Next, the detailed configuration and the function of the rotary color filter 2 will now be described. FIG. 3 is a schematic plan view showing a configuration example of the rotary color filter 2 of the projector according to the embodiment 1 of the present invention, and FIG. 4 is a schematic view showing the function thereof. While the rotary color filter 2 having the filter segments for transmitting light of the four colors of white (W), red (R), green (G) and blue (B) is exemplified in FIG. 3, this is merely an example where the brightness (white) is the priority. Therefore, this means that the angle of the filter segments for transmitting light of the respective colors may be different from that in the illustrated example, or the filter segments may be for only three colors of red (R), green (G) and blue (B), or these filter segments may be replaced with filter segments for three colors of cyan, magenta and yellow, or the filter segments may be for six colors of red (R), green (G), blue (B), cyan, magenta and yellow may be used, or the filter segments may include one for white in any instance.

As specifically shown as an example in FIG. 3, allocation of the filter segments in the rotary color filter 2 of the embodiment 1 is such that the filter segment for white (W) is within the range from 90 to 100 degrees, that for green (G) is within the range from 86 to 96 degrees, that for red (R) is within the range from 82 to 92 degrees and that for blue (B) is within the range from 82 to 92 degrees, and needless to say, amounting to 360 degrees in total. Spot sizes of the same angle ranging from 8 to 18 degrees are set between the filter segments (i.e., the equiangular spot sizes of 4 through 9 degrees are set on the both sides of the boundaries between the respective filter segments adjoining with each other), and the portions other than these spot sizes are the ranges (effective angles) which are available for transmitting the emitted light from the lamp 1. Hence, as for the effective angles of the filter segments in the respective colors, that for white (W) is within the range from 77 to 87 degrees, that for green (G) is within the range from 73 to 83 degrees, that for red (R) is within the range from 69 to 79 degrees and that for blue (B) is within the range from 69 to 79 degrees. In this instance as well, it is needless to say that the sum of the total of the effective angles for the respective colors and the total of the four equiangular spot sizes becomes 360 degrees of course.

In such configuration of the filter segments, in a case where a simple white-colored screen is to be projected, as shown in FIG. 4(a), pulses having a predetermined current value are superimposed upon the current applied to the lamp 1 from the power source circuit 21 so that the quantity of the light from the lamp 1 increases during a period which corresponds to a range from 47 to 57 degrees in a central portion of the rotary color filter 2, namely, a period in which the emitted light from the lamp 1 transmits through the filter segment for transmitting white light.

At the same time, during this period, a signal of the white image data is given from the control circuit 10 to the DMD drive circuit 13 so that the DMD 3 becomes in a state for displaying a white image. This increases the quantity of white light only while the rotary color filter 2 makes one rotation, that is, only during a period which corresponds to the range from 47 to 57 degrees (i.e., approximately 13 through 16 %) among 360 degrees and projects to a screen via the projection optical system 4, but does not the quantities of the light of the other color components. Since this increases the quantity of white light in the image projected to the screen, the brightness of the entire image increases.

When the quantity of red light is insufficient in such an instance that the brightness is the priority, as shown in FIG. 4(b), the pulse current is superimposed upon the current applied to the lamp 1 in a similar manner to that above also during a period which corresponds to a range from 47 to 57 degrees within the rotary color filter 2, namely, a period in which the emitted light from the lamp 1 transmits through the filter segment for transmitting red light, thereby increasing the quantity of the light from the lamp 1. Since this increases the quantity of red light in the image projected to the screen, the brightness of the red color component increases in the entire image.

Though the brightness of the red color component in the image projected to the screen is still insufficient, the current value of the pulses applied upon the current which is applied to the lamp 1 from the power source circuit 21 is made to be increased further. Separately from this, as shown in FIG. 4(c), it is possible to increase the quantity of the light of the lamp 1 in a similar manner to that above also during an entire period corresponding to the entire effective angle of the rotary color filter 2 being a period in which the emitted light from the lamp 1 transmits through the filter segment for transmitting red light. Since this further increases the quantity of red light in the image projected to the screen, the brightness of the red color component as a whole in the image further increases. In this instance, the image display signal is extended in accordance with the duration of the pulse current which is superimposed upon the current applied to the lamp 1.

In other words, whether to apply the pulses upon the lamp 1 within the effective angle of the filter segment for transmitting red light for how long period and to increase the quantity of the light of the lamp 1 for how many in the period can be as desired, by settings of the lamp control circuit 22 of the lamp drive circuit 11 by the control circuit 10, and using one or the both, the brightness of a particular color component can be increased.

Further, while the example shown in FIG. 4(b) and FIG. 4(c) are examples that the quantity of red light alone among the chromatic colors is increased, with respect to the other colors of blue and green as well, in a similar manner, the pulses may be superimposed upon the current applied to the lamp 1 from the power source circuit 21 to thereby increase the quantity of the light from the lamp 1, change a period in which the quantity of the light is increased and change the current value of the applied pulses, and hence increase the quantities of projected light in the respective colors from the DMD 3, that is, increase the brightness of each color component. In addition, it is of course possible not only to arbitrarily increase the quantity of projected light in each color from the DMD 3 but also to arbitrarily increase the quantities of projected light in any two colors among the three colors or in all three colors from the DMD 3.

As described above, the configuration according to the present invention basically adopts at increasing the quantity of light of the lamp 1 in any desired color component (which may in some instances white) in image data during a period in which the DMD 3 projects light of that color, and increases the quantity of light, i.e., the brightness in that color in an image projected to a screen or the like by changing how much and how long the quantity of the light from the lamp 1 is increased, various applications for image quality adjustment are possible.

In the event that one intends to use the projector according to the present invention as a so-called data projector, it is preferable that the brightness of white light is increased since a projected image is required to be as bright as possible. When the color reproducibility is poor due to an insufficient quantity of light of a particular color component, the processing described above may be performed for the color of the insufficient quantity of light, i.e., the quantity of light of the lamp 1 may be increased during a period in which the emitted light from the lamp 1 is transmitted through the filter segment for transmitting light of the color whose quantity of light is insufficient.

Further, depending upon the type of a projected image, e.g., whether the image is that of a movie or a monitor screen of a computer (that is, to be used as a data projector), etc., various modes may be prepared which set an increase of the quantity of light in each color to a particular value in advance, and any one of the modes may be chosen in response to operation of the operating section 14 by a user. For instance, when the user operates the operating section 14 to select a movie mode, the control circuit 10 sets the lamp control circuit 22 of the lamp drive circuit 11 so that the quantities of red and green light increase 20 %, respectively. Also, when the user operates the operating section 14 to select a data mode (mode for displaying a monitor screen of a computer), the control circuit 10 sets the lamp control circuit 22 of the lamp drive circuit 11 so that the quantities of red and green light increase 40 through 50 %, respectively.

It is also possible to arbitrarily adjust the brightness in each color and that of an entire image individually in accordance with a surrounding environment, the user's preference or the like. In this case, by operation of the operating section 14 by the user, a display apparatus disposed to the operating section 14 shows a slider type tool bar for adjusting the brightness of each color, or on-screen displayed under the control of the control circuit 10. Hence, the user can set adjustment values regarding an increase or decrease of the quantity of light in each color and the brightness of an entire image (namely, the quantity of white light) on such displaying.

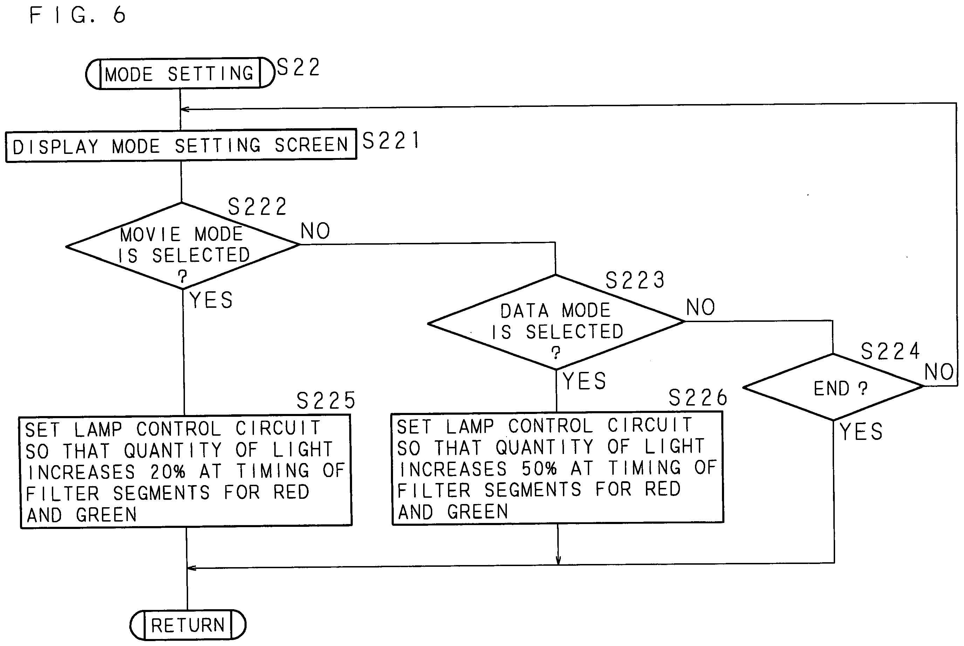

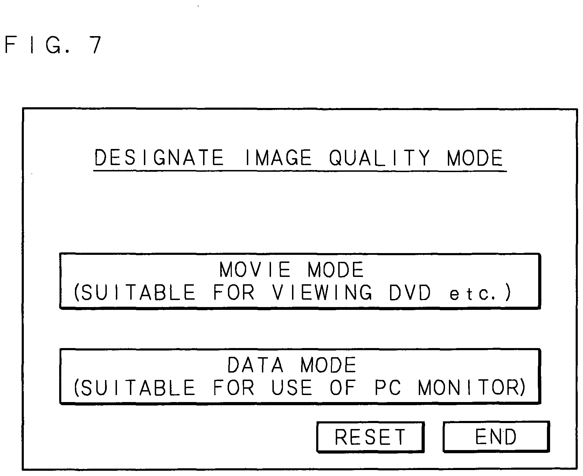

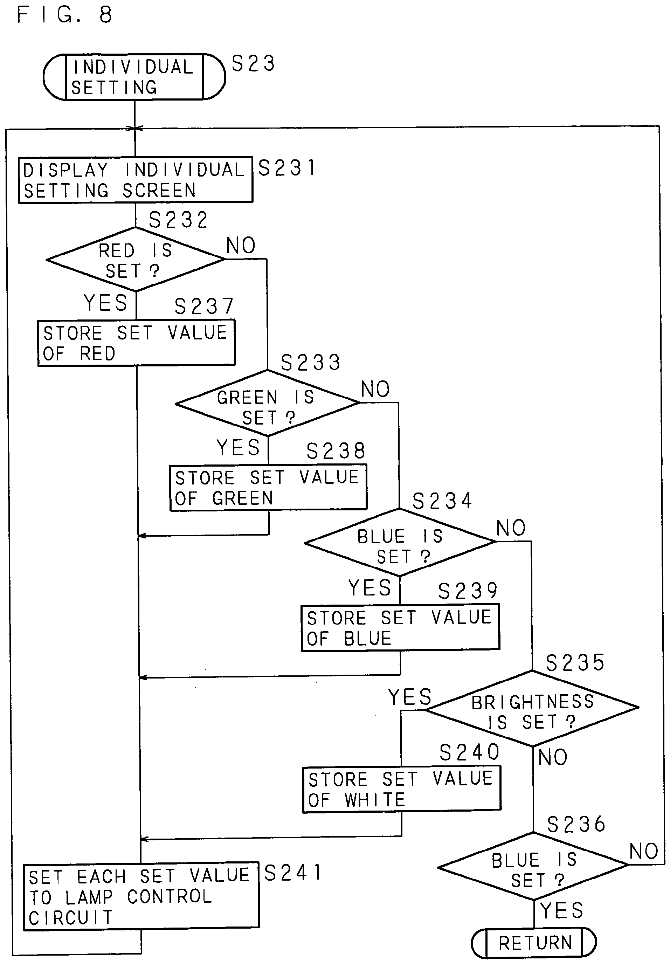

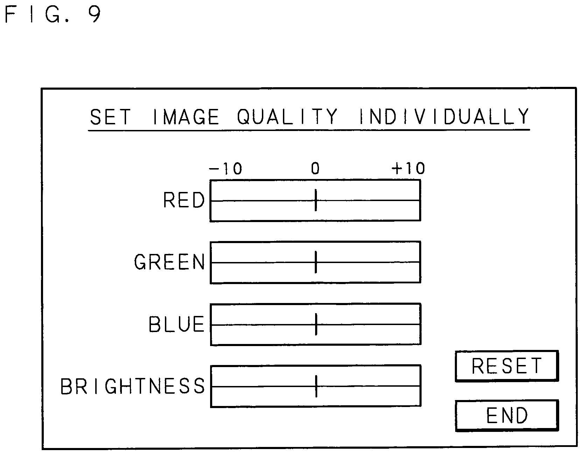

A method of image quality adjustment for the projector according to the embodiment 1 of the present invention will now be described with reference to flow charts showing a procedure of the same. FIG. 5 shows a flow chart showing the entire procedure of the projector according to the embodiment 1 of the present invention, FIG. 6 shows a flow chart of a sub routine which is for "MODE SETTING" shown in the flow chart in FIG. 5, FIG. 7 shows a schematic view of a display screen for "MODE SETTING", FIG. 8 shows a flow chart of a sub routine which is for "INDIVIDUAL SETTING", and FIG. 9 shows a schematic view of a display screen for "INDIVIDUAL SETTING". It is needless to say that the processing shown in these flow charts are executed by the control circuit 10 in accordance with a control program pre-installed in the control circuit 10.

First, the control circuit 10 monitors whether or not an operation due to operation of the operating section 14 has been accepted (NO at Step S11). When there is accepted operation (YES at Step S11) the control circuit 10 judges whether or not it is an instruction for "IMAGE QUALITY ADJUSTMENT" (YES at Step S12), an instruction for "IMAGE PROJECTION" (NO at Step S12 and YES at S13) or other instruction (NO at Step S13). When other instruction than "IMAGE QUALITY ADJUSTMENT" and "IMAGE PROJECTION" has been accepted, the control circuit 10 executes other processing corresponding to the accepted instruction (Step S14), and returns the process to Step S11.

When an instruction for image quality adjustment has been accepted (YES at Step S12), the control circuit 10 judges whether or not image quality is instructed by mode designation (Step S21). To be more specific, when the user instructs "IMAGE QUALITY ADJUSTMENT", the control circuit 10 makes a display for the user to select "MODE SETTING" or "INDIVIDUAL SETTING" on the display apparatus disposed to the operating section 14. Upon selection of "MODE SETTING" by the user (YES at Step S21), the control circuit 10 executes processing of the mode setting (Step S22). It is to be noted that the mode setting processing is prepared as a sub routine shown in FIG. 6 which will be described later.

On the contrary, when the user selects "INDIVIDUAL SETTING" (NO at Step S21), the control circuit 10 executes processing of individual setting (Step S23). It is to be noted that the processing of individual setting is prepared as a sub routine shown in FIG. 8 which will be described later.

FIG. 6 is a flow chart of the sub routine which is the processing of "MODE SETTING" at Step S22 shown in FIG. 5. First, the control circuit 10 makes a display of a mode setting screen (Step S221) on the display apparatus disposed to the operating section 14. The mode setting screen is a screen as shown in the schematic view in FIG. 7, and can select and designate, for example, "MOVIE MODE" or "DATA MODE", and also can reset. Of course, it is possible to prepare various other modes than these two modes.

When the user selects "MOVIE MODE" on the mode setting screen (YES at Step S222), the control circuit 10 sets the lamp control circuit 22 of the lamp drive circuit 11 so that the quantity of light of the lamp 1 increases 20 % at the timing of the filter segments for transmitting red and green light, respectively (Step S225). On the contrary, when the user selects "DATA MODE" on the mode setting screen (NO at Step S222 and YES at S223), the control circuit 10 sets the lamp control circuit 22 of the lamp drive circuit 11 so that the quantity of light of the lamp 1 increases 50 % at the timing of the filter segments for transmitting red and green light, respectively (Step S226).

When the user selects "END" on the mode setting screen (NO at Step S222, NO at Step S223 and YES at S224), the control circuit 10 returns the process to the main routine shown in FIG. 5. In the event of NO at all of Step S222, S223 and S224, the control circuit 10 returns the process to Step S221 and waits for an instruction from the user. Further, although not shown in the flow charts, when the user selects "RESET", the respective settings are initialized so as to maintain the quantity of emitted light of the lamp 1 at a usual value.

FIG. 8 is a flow chart of the sub routine which is the processing of "INDIVIDUAL SETTING" at Step S23 shown in FIG. 5. First, the control circuit 10 makes display of an individual setting screen (Step S231) on the display apparatus disposed to the operating section 14. The individual setting screen is a screen as shown in the schematic view in FIG. 9, and can, for example, select and designate any one of "RED", "GREEN", "BLUE" and "BRIGHTNESS" which the user desires. Shown in FIG. 9 is a default state that all adjustment values are "±0".

When the user selects "RED" and sets any value on the individual setting screen (YES at Step S232), the control circuit 10 temporarily stores the set value for the red color (Step S237). Meanwhile, when the user selects "GREEN" and sets any value (NO at Step S232 and YES at S233), the control circuit 10 temporarily stores the set value for the green color (Step S238). When the user selects "BLUE" and sets any value (NO at Step S232, NO at S233 and YES at S234), the control circuit 10 temporarily stores the set value for the blue color (Step S239). Further, when the user selects "BRIGHTNESS" and sets any value (NO at Step S232, S233 and S234, and YES at S235), the control circuit 10 temporarily stores the set value for the white color (Step S240).

The set values for the respective colors thus temporarily stored are set in the lamp control circuit 22 of the lamp drive circuit 11 by the control circuit 10 (Step S241), and the process then returns to Step S23.

When the user selects "END" on the individual setting screen (NO at Step S232, S233, S234 and S235, and YES at S236), the control circuit 10 returns the process to the main routine shown in FIG. 5. In the event of NO at all of Step S232 through S236, the control circuit 10 returns the process to Step S221 and waits for an instruction from the user. Further, although not shown in the flow charts, when the user selects "RESET", the respective settings are initialized so as to maintain the brightness of the lamp 1 in the respective colors at usual values.

After the image quality adjustment setting is executed by the user, when the user gives to the operating section 14 an instruction of image projection (YES at Step S13), the control circuit 10 starts image projection (Step S31). Hence, an image projected by the projector after this is such an image in which, by increasing the quantity of light of the lamp 1 when at least one of color elements is projected, the quantity of light of the color increases.

During start image projection (NO at Step S31 and S32, and NO at Step S33), the user can operate the operating section 14 and adjust an image quality as desired any time (YES at Step S32). When the user instructs end of processing by operation of the operating section 14 (NO at Step S32 and YES at S33), irrespective of whether image projection is halfway through, this processing is ended.

### [Embodiment 2]

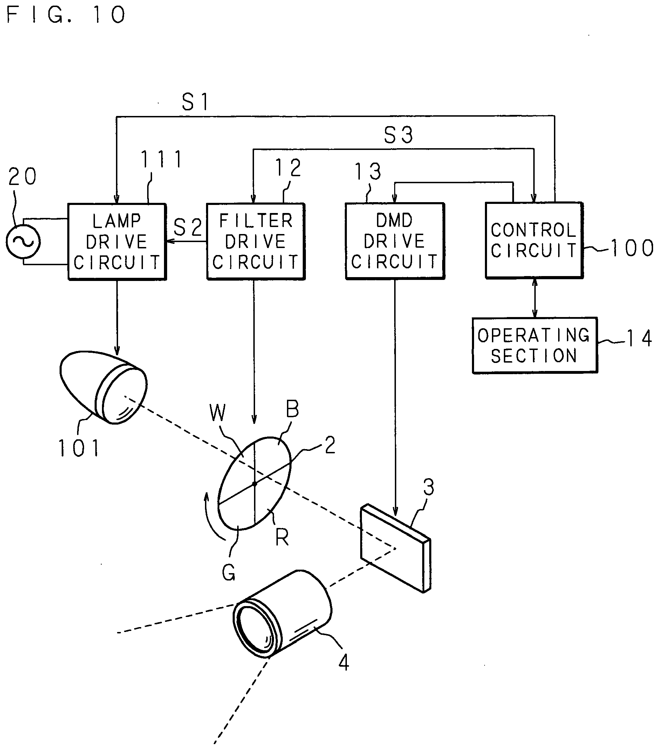

As the embodiment 2, use of a lamp of the alternating-current drive type as those described in Patent Documents 3 and 4 which inverts the phase of a direct current value at particular intervals will now be described. FIG. 10 is a schematic block diagram showing a configuration example of the projector according to the embodiment 2 of the present invention.

The projector according to the embodiment 2 is configured by a lamp 101 which is a light source, a rotary color filter 2 in which light transmittance filter segments respectively transmitting light in four colors in the illustrated example of white (W), blue (B), red (R) and green (G) are arranged within a rotary region, a DMD (Digital Micromirror Device) 3 as spatial optical modulating means which performs spatial optical modulation based on image data of emitted light from the lamp 101 after transmitted through any one of the filter segments of the rotary color filter 2, a projection optical system 4 formed by plural lenses for projecting modulated light modulated by the DMD 3 to an external screen or the like, a control system described later, and the like. However, in the embodiment 2 whose configuration is shown in FIG. 10, as the lamp 101, a lamp of the alternating-current drive type as those described in Patent Documents 3 and 4 which inverts the phase of a direct current value at particular intervals is used.

Like the projector according to the embodiment 1, the projector according to the embodiment 2 as well is applicable to both the so-called front projection type which projects an image to an external screen or the like and the rear projection type which projects from behind a screen. Further, although the embodiment 2 comprises the DMD as spatial optical modulating means, other spatial optical modulating means such as a liquid crystal panel may of course be used. In addition, although appropriate optical systems are disposed between the lamp 101 and the rotary color filter 2 and between the rotary color filter 2 and the DMD 3, as these are not relevant directly to the present invention, they will not be described.

The control system is configured by a control circuit 100 which utilizes a microcomputer, a microprocessor, etc., a lamp drive circuit 111 which controls driving of the lamp 101 in response to settings from the control circuit 100, a filter drive circuit 12 which controls rotations of the rotary color filter 2 in the same manner, a DMD drive circuit 13 which controls the DMD 3 in the same manner, the operating section 14 through which the control circuit 100 accepts an operation instruction from a user, and the like. A display apparatus such as an LCD disposed to the operating section 14 may display various guidance, instructions and the like from the control circuit 100 to a user, or these may be given as on-screen display (OSD) under the control of the control circuit 100, or both of these may of course be exercised.

As mentioned above, as the lamp 101, a lamp of the alternating-current drive type as those described in Patent Documents 3 and 4 which inverts the phase of a direct current value at particular intervals is used. Such the lamp 101 of the alternating-current drive type can increase the quantity of emitted light by increasing direct current value.

This lamp 101 emits light by applying an alternating current, which inverts the direct current value at particular intervals, in accordance with the settings of the control circuit 100 from the lamp drive circuit 111 connected to a commercial alternating-current power source 20. The quantity of emitted light from the lamp 101 can be controlled by giving a control signal S1 from the control circuit 100 to the lamp drive circuit 111 and by controlling the amplitude and the timing of the current value applied to the lamp 101 by the lamp drive circuit 111.

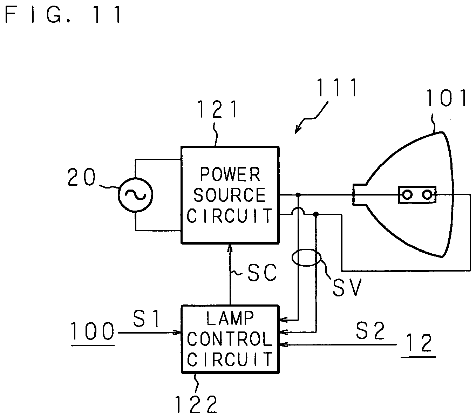

FIG. 11 is a schematic diagram showing a configuration example of the lamp drive circuit 111 of the projector according to the embodiment 2 of the present invention. A power source circuit 121 inputs commercial alternating-current power, converts it into a direct current having a predetermined current value and applies it to the lamp 101 while inverting the phase at particular intervals. The applied current value from the power source circuit 121 to the lamp 101 is fed back to a lamp control circuit 122 as a signal SV and usually maintained at a constant value until whose phase is inverted. Meanwhile, to the lamp control circuit 122, information for controlling the value and the phase of the direct current applied to the lamp 101 from the power source circuit 121 is given. This information is information for setting both the value of the current to be varied and the timing of phase inversion.

The lamp control circuit 122 is further given, as a signal S2, information which indicates the state of rotation of the rotary color filter 2, that is, where the filter segment transmitting light of which color is located, from the filter drive circuit 12. The signal S2 is also given to the control circuit 100 as a signal S3 shown in FIG. 10. The signal S3 given to the control circuit 100 is utilized for timing control of the control signal S1 which is given from the control circuit 100 to the lamp drive circuit 111. Since the lamp control circuit 122 knows the timing at which each filter segment of the rotary color filter 2 transmits emitted light from the lamp control circuit 122, the timing of actually varying the current given to the lamp 101 is determined from the relationship between this timing and the timing set by the control signal S1 given from the control circuit 100.

Based on the above, the lamp control circuit 122 gives a control signal SC to the power source circuit 121, in accordance with the information set by the control signal S1 from the control circuit 100 and the timing given from the filter drive circuit 12 as the signal S2. By the fact that this control signal SC is given, a change of the current value designated by the control signal SC is superimposed upon the current applied to the lamp 101 from the power source circuit 121 during a period designated by the control signal SC, and therefore, the current value given to the lamp 101 accordingly increases, as a result the quantity of emitted light from the lamp 101 increases.

When the projector according to the embodiment 2 of the present invention operates, the rotary color filter 2, driven by the filter drive circuit 12 which includes an actuator not shown, rotates at a constant velocity in the direction of an arrow under the control of the control circuit 100. The rotary color filter 2 is similar to that according to the embodiment 1 described above, and separates the emitted light from the lamp 101 into the four colors in a time-divided fashion and gives them to the DMD 3. As in the embodiment 1, the filter drive circuit 12 comprises means for detecting rotational position of the rotary color filter 2. Therefore, at each time point, the lamp control circuit 122 knows that the filter segment for transmitting light of which color transmits the emitted light from the lamp 101 to the DMD 3.

Under the control of the control circuit 100, the DMD 3 modulates the light transmitted through the rotary color filter 2 and projects the light toward the projection optical system 4 in accordance with digital image data given from image data supplying means not shown such as a computer, a DVD player, a TV tuner or the like. While illustrated as an optical system for the front projection type in the illustrated example, the projection optical system 4 may be an optical system for the rear projection type as in the embodiment 1. Further, similar to the embodiment 1, of course, the projection optical system 4 as well allows zoom adjustment, key-stone adjustment and the like under the control of the control circuit 100.

In the embodiments 1 and 2 described above, basically, the quantity of light of the lamp 1 (101) is increased, thereby adjusting the brightness of each color component in an image projected to a screen. Meanwhile, it is possible to increase the brightness of a particular color component in an image projected to a screen also by extending the duration of an increase of the quantity of light of the lamp 1 (101) during a period in which image data regarding a color component to be adjusted for brightness is given to the DMD 3 and accordingly by extending the duration of a signal of the image data given to the DMD 3. In other words, it is possible to adjust the brightness of each color component in an image projected to a screen, by means of the total quantity of light from the lamp 1 (101) transmitted through the filter segment of the rotary color filter 2 for transmitting light in the particular color (which is defined by the product of the increase of the quantity of the light and the duration of the same).

By the way, in any one of the embodiments described above, the lamp 1 (101) used as the light source is a high-pressure mercury lamp whose spectral characteristic is unbalanced during a period from turning on until becoming in a stable state as compared with being a stable state, and the quantity of emitted light gradually increases before becoming in a stable state, thus giving rise to a problem that a projected image during this period has poor color reproducibility corresponding to the unbalanced spectral characteristic and is dark. To solve such problem, in the projector according to the present invention, the control circuit 10 (100) executes a following control in the period from the lamp 1 (101) starts turning on until it becomes in a stable state.

Note that the period from the lamp 1 (101) starts turning on until it becomes in a stable state, the condition of the spectral characteristic during this, an increase ratio of the quantity of emitted light and the like are known in advance, and such information are given to the control circuit 10 (100).

At the time when the lamp 1 (101) turns on, information for indicating the rotation state of the rotary color filter 2, that is, which filter segment is located at which position is given as the signal S2 from the filter drive circuit 12 to the lamp control circuit 22 (122) of the lamp drive circuit 11 (111). Since this signal S2 is given also to the control circuit 10 (100) as the signal S3, the control circuit 10 (100) gives the lamp control circuit 22 (122) of the lamp drive circuit 11 (111) the control signal S1 which increases the brightness in a particular color so that white balance is maintained in accordance with the spectral characteristic during a period until the lamp 1 (101) becomes in a stable state. In response to this, the lamp control circuit 22 (122) gives the power source circuit 21 (121) the control signal SC which controls the current value given to the lamp 1 (101).

By such control of the control circuit 10 (100), the poor color reproducibility due to the unbalanced spectral characteristic of the lamp 1 (101) since turning on of the lamp 1 (101) until the lamp 1 (101) has become in a stable state is improved.

Further, the control circuit 10 (100) gives the control signal S1 to the lamp control circuit 22 (122) of the lamp drive circuit 11 (111) so as to increase the brightness of the white color in accordance with the brightness of the lamp 1 (101) during a period until the lamp 1 (101) becomes in a stable state. In response to this, the lamp control circuit 22 (122) gives the power source circuit 21 (121) the control signal SC which controls the current value given to the lamp 1 (101), whereby the quantity of white light increases.

Such control by the control circuit 10 (100) improves the darkness of a projected image caused by the worse brightness of the lamp 1 (101) during a period from turning on of the lamp 1 (101) until it has become in a stable state as compared with the stable state.

The control circuit 10 (100) becomes in the usual controlling state described earlier, after a period in which the lamp 1 (101) becomes in a stable state from turning on.

As described in detail above, irrespective of the restriction of the rotary color filter, the projector according to the present invention eliminates the trade-off relation, which exists in the conventional single plate type projector using a rotary color filter, between the brightness, and the color reproducibility and the color temperature of an image projected from the spatial optical modulating means, and therefore, is capable of arbitrarily adjusting not only the color reproducibility of the projected image but the brightness of the projected image as well.

### [Industrial Applicability]

The projector according to the present invention is applicable to a lamp of the direct-current drive type which superimposes a pulse current upon an applied direct current, i.e., which increases the value of the applied direct current, to thereby increase the quantity of emitted light from the lamp and to a lamp of the alternating-current drive type which inverts the phase of a direct current value at particular intervals.

## Claims

1. A projector comprising: a light source (1, 101) that emits white light; spatial optical modulating means (3) for converting emitted light from said light source (1, 101) into modulated light that expresses an image; a rotary color filter (2) that has a rotary region where filter segments each for transmitting light of plural chromatic colors are arranged, and separate emitted light from said light source (1, 101) into said different chromatic colors by rotating said rotary region interposed between said light source (1, 101) and said spatial optical modulating means (3); and light source driving means (11, 111) having a function for changing the quantity of emitted light from said light source (1, 101), **characterized by** comprising:
controlling means for controlling said light source driving means (11, 111) so as either to increase the quantity of emitted light from said light source (1, 101) during a period in which light from said light source (1, 101) is transmitted through one filter segment, or to increase a length of a period in which said light source transmits light through said one filter segment, wherein a spot size of the same angle is set between two adjacent filter segments, wherein a portion other than the spot size in said rotary colour filter is a range which is available for transmitting the emitted light from said light source (1, 101),
wherein the quantity of said emitted light from said light source (1, 101) can be increased during a period corresponding to said portion other than the spot size.

2. The projector as set forth in claim 1, wherein said rotary color filter (2) has said rotary region where said filter segments respectively for transmitting white light and the light of said plural chromatic colors are arranged, and separates said emitted light into white color and said plural chromatic colors.

3. The projector as set forth in claim 1 or 2, wherein said plural chromatic colors are red, green and blue.

4. The projector as set forth in claim 1 or 2, wherein said plural chromatic colors are cyan, magenta and yellow.

5. The projector as set forth in claim 1 or 2, wherein said plural chromatic colors are red, green, blue, cyan and/or magenta and/or yellow.

6. The projector as set forth in claim 1, wherein said rotary color filter (2) has said rotary region where said filter segments respectively for transmitting white light and the light of said plural chromatic colors are arranged, and separates said emitted light into white color and said plural chromatic colors, and
wherein said plural chromatic colors are red, green and blue,
the projector further comprising
controlling means for selectively setting a first mode under which an increase of the quantity of emitted light from said light source (1, 101) transmitted through filter segments for transmitting red and green light with respect to the quantity of emitted light from said light source (1, 101) transmitted through a filter segment for transmitting white light is at a first ratio, and a second mode under which an increase is at a second ratio greater than said first ratio.

7. The projector as set forth in claim 6, wherein said first ratio is 20 % or lower and said second ratio is 40 through 50 %.

8. The projector set forth in claim 1, wherein said rotary color filter (2) has said rotary region where said filter segments respectively for transmitting white light and the light of said plural chromatic colors are arranged, and separates said emitted light into white color and said plural chromatic colors,
wherein said plural chromatic colors are red, green and blue, and
wherein it is possible to arbitrarily adjust brightness in each of said white color and said plural chromatic colors.

9. The projector as set forth in any one of claims 6 through 8, wherein said controlling means controls said light source driving means (11, 111) so as to increase the quantity of emitted light from said light source (1, 101) transmitted through filter segments for transmitting white light and light in other respective colors, by increasing the quantity of emitted light from said light source (1, 101), or changing both an increase of the quantity of emitted light from said light source (1, 101) and a period in which the quantity of emitted light from said light source (1, 101) is increased.

10. The projector as set forth in any one of claims 1, 2, 6 and 8, wherein said controlling means controls said light source driving means (11, 111) so as to change an increase of the quantity of emitted light from said light source (1, 101).

11. The projector as set forth in any one of claims 1 through 10, wherein said controlling means controls said light source driving means (11, 111) so as to compensate the spectral characteristic of said light source (1, 101) which is unbalanced during a period from turning on of said light source (1, 101) until becoming in a stable state.

12. The projector as set forth in any one of claims 1 through 10, wherein said controlling means controls said light source driving means (11, 111) so as to compensate the quantity of emitted light from said light source (1, 101) which gradually increases during a period from turning on of said light source (1, 101) until becoming in a stable state.

## Patentansprüche

1. Projektor, der Folgendes umfasst: eine Lichtquelle (1, 101) die weißes Licht ausstrahlt; räumliche optische Modulationsmittel (3) zum Umwandeln von ausgestrahltem von der Lichtquelle (1, 101) in moduliertes Licht, das ein Bild ausdrückt; einen Farbdrehfilter (2), der eine Drehregion aufweist, in der jeweils dem Übertragen von Licht mehrerer chromatischer Farben dienende Filtersegmente angeordnet sind und ausgestrahltes Licht von der Lichtquelle (1, 101) in die verschiedenen chromatischen Farben trennen, indem sie die zwischen der Lichtquelle (1, 101) und dem räumlichen optischen Modulationsmittel (3) angeordnete Drehregion drehen; und ein Lichtquellen-Ansteuermittel (11, 111) mit einer Funktion zum Ändern der Menge ausgestrahlten Lichts von der Lichtquelle (1, 101), **dadurch gekennzeichnet, dass** es Folgendes umfasst:
ein Steuermittel zum Steuern des Lichtquellen-Ansteuermittels (11, 111), um entweder die Menge ausgestrahlten Lichts von der Lichtquelle (1, 101) während eines Zeitraums zu erhöhen, in dem Licht von der Lichtquelle (1, 101) durch ein Filtersegment übertragen wird, oder eine Länge eines Zeitraums zu vergrößern, in dem die Lichtquelle Licht durch das eine Filtersegment überträgt,
wobei eine Fleckgröße des gleichen Winkels zwischen zwei benachbarten Filtersegmenten eingestellt ist,
wobei es sich bei einem Abschnitt außer der Fleckgröße in dem Farbdrehfilter um einen Bereich handelt, der zum Übertragen des ausgestrahlten Lichts von der Lichtquelle (1, 101) verfügbar ist,
wobei die Menge des ausgestrahlten Lichts von der Lichtquelle (1, 101) während eines Zeitraums erhöht werden kann, der dem Abschnitt außer der Fleckgröße entspricht.

2. Projektor nach Anspruch 1, wobei der Drehfarbfilter (2) die Drehregion aufweist, in der die Filtersegmente zum Übertragen von weißem Licht bzw. dem Licht der mehreren chromatischen Farben angeordnet sind, und das ausgestrahlte Licht in weiße Farbe und die mehreren chromatischen Farben trennt.

3. Projektor nach Anspruch 1 oder 2, wobei es sich bei den mehreren chromatischen Farben um Rot, Grün und Blau handelt.

4. Projektor nach Anspruch 1 oder 2, wobei es sich bei den mehreren chromatischen Farben um Cyan, Magenta und Gelb handelt.

5. Projektor nach Anspruch 1 oder 2, wobei es sich bei den mehreren chromatischen Farben um Rot, Grün, Blau, Cyan und/oder Magenta und/oder Gelb handelt.

6. Projektor nach Anspruch 1, wobei der Drehfarbfilter (2) die Drehregion aufweist, in der die Filtersegmente zum Übertragen von weißem Licht bzw. dem Licht der mehreren chromatischen Farben angeordnet sind, und das ausgestrahlte Licht in weiße Farbe und die mehreren chromatischen Farben trennt, und
wobei es sich bei den mehreren chromatischen Farben um Rot, Grün und Blau handelt,
wobei der Projektor weiter Folgendes umfasst:
ein Steuermittel zum selektiven Einstellen eines ersten Modus, in dem eine Zunahme der Menge ausgestrahlten Lichts von der Lichtquelle (1, 101), die durch Filtersegmente zum Übertragen von rotem und grünem Licht übertragen wird, in Bezug auf die Menge ausgestrahlten Lichts von der Lichtquelle (1, 101), das durch ein Filtersegment zum Übertragen von weißem Licht übertragen wird, bei einem ersten Verhältnis liegt, und eines zweiten Modus, in dem eine Zunahme bei einem zweiten Verhältnis liegt, das größer als das erste Verhältnis ist.

7. Projektor nach Anspruch 6, wobei das erste Verhältnis 20 % oder weniger beträgt und das zweite Verhältnis 40 bis 50 % beträgt.

8. Projektor nach Anspruch 1, wobei der Drehfarbfilter (2) die Drehregion aufweist, in der die Filtersegmente zum Übertragen von weißem Licht bzw. dem Licht der mehreren chromatischen Farben angeordnet sind, und das ausgestrahlte Licht in weiße Farbe und die mehreren chromatischen Farben trennt,
wobei es sich bei den mehreren chromatischen Farben um Rot, Grün und Blau handelt, und
wobei es möglich ist, die Helligkeit in jeder der weißen Farbe und der mehreren chromatischen Farben willkürlich zu verstellen.

9. Projektor nach einem der Ansprüche 6 bis 8, wobei das Steuermittel das Lichtquellen-Ansteuermittel (11, 111) steuert, um die Menge ausgestrahlten Lichts von der Lichtquelle (1, 101), die durch Filtersegmente zum Übertagen von weißem Licht übertragen wird, und Licht in anderen jeweiligen Farben durch Erhöhen der Menge ausgestrahlten Lichts von der Lichtquelle (1, 101) oder Ändern sowohl einer Zunahme der Menge ausgestrahlten Lichts von der Lichtquelle (1, 101) als auch eines Zeitraums, in dem die Menge ausgestrahlten Lichts von der Lichtquelle (1, 101) erhöht wird, zu erhöhen.

10. Projektor nach einem der Ansprüche 1, 2, 6 und 8, wobei das Steuermittel das Lichtquellen-Ansteuermittel (11, 111) steuert, um eine Zunahme der Menge ausgestrahlten Lichts von der Lichtquelle (1, 101) zu ändern.

11. Projektor nach einem der Ansprüche 1 bis 10, wobei das Steuermittel das Lichtquellen-Ansteuermittel (11, 111) steuert, um die spektrale Charakteristik der Lichtquelle (1, 101) auszugleichen, die während eines Zeitraums vom Einschalten der Lichtquelle (1, 101), bis sie in einen stabilen Zustand gelangt, unausgeglichen ist.

12. Projektor nach einem der Ansprüche 1 bis 10, wobei das Steuermittel das Lichtquellen-Ansteuermittel (11, 111) steuert, um die Menge ausgestrahlten Lichts von der Lichtquelle (1, 101) auszugleichen, die während eines Zeitraums vom Einschalten der Lichtquelle (1, 101), bis sie in einen stabilen Zustand gelangt, allmählich zunimmt.

## Revendications

1. Projecteur comprenant : une source de lumière (1, 101) qui émet une lumière blanche ; un moyen de modulation optique spatiale (3) pour convertir la lumière émise par ladite source de lumière (1, 101) en une lumière modulée qui exprime une image ; un filtre chromatique rotatif (2) qui comporte une région rotative où sont agencés des segments de filtre servant chacun à transmettre une lumière de plusieurs couleurs chromatiques, et séparer la lumière émise par ladite source de lumière (1, 101) en lesdites différentes couleurs chromatiques en faisant tourner ladite région rotative interposée entre ladite source de lumière (1, 101) et ledit moyen de modulation optique spatiale (3) ; et un moyen de commande de source de lumière (11, 111) ayant pour fonction de changer la quantité de lumière émise par ladite source de lumière (1, 101), **caractérisé en ce qu'**il comprend :
un moyen de régulation pour réguler ledit moyen de commande de source de lumière (11, 111) de manière soit à augmenter la quantité de lumière émise par ladite source de lumière (1, 101) durant une période où la lumière provenant de ladite source de lumière (1, 101) est transmise à travers un segment de filtre, soit à augmenter une longueur d'une période durant laquelle ladite source de lumière transmet la lumière à travers ledit segment de filtre,
dans lequel une taille de spot du même angle est réglée entre deux segments de filtre adjacents,
dans lequel une partie autre que la taille de spot dans ledit filtre chromatique rotatif est une plage disponible pour transmettre la lumière émise depuis ladite source de lumière (1, 101),
dans lequel la quantité de ladite lumière émise par ladite source de lumière (1, 101) peut être augmentée durant une période correspondant à ladite partie autre que la taille de spot.

2. Projecteur selon la revendication 1, dans lequel ledit filtre chromatique rotatif (2) comporte ladite région rotative où lesdits segments de filtre servant respectivement à transmettre une lumière blanche et la lumières desdites plusieurs couleurs chromatiques sont agencés, et sépare ladite lumière émise en couleur blanche et lesdites plusieurs couleurs chromatiques.

3. Projecteur selon la revendication 1 ou 2, dans lequel lesdites plusieurs couleurs chromatiques sont rouge, vert et bleu.

4. Projecteur selon la revendication 1 ou 2, dans lequel lesdites plusieurs couleurs chromatiques sont cyan, magenta et jaune.

5. Projecteur selon la revendication 1 ou 2, dans lequel lesdites plusieurs couleurs chromatiques sont rouge, vert, bleu, cyan et/ou magenta et/ou jaune.

6. Projecteur selon la revendication 1, dans lequel ledit filtre chromatique rotatif (2) comporte ladite région rotative où lesdits segments de filtre servant respectivement à transmettre la lumière blanche et la lumières desdites plusieurs couleurs chromatiques sont agencés, et sépare ladite lumière émise en couleur blanche et lesdites plusieurs couleurs chromatiques, et
dans lequel lesdites plusieurs couleurs chromatiques sont rouge, vert et bleu,
le projecteur comprenant en outre
un moyen de régulation pour régler sélectivement un premier mode dans lequel une augmentation de la quantité de lumière émise par ladite source de lumière (1, 101) transmise à travers les segments de filtre pour transmettre la lumière rouge et verte par rapport à la quantité de lumière émise par ladite source de lumière (1, 101) transmise à travers un segment de filtre pour transmettre la lumière blanche est à un premier rapport, et un second mode dans lequel une augmentation est à un second rapport supérieur audit premier rapport.

7. Projecteur selon la revendication 6, dans lequel ledit premier rapport est de 20 % ou moins et ledit second rapport est de 40 à 50 %.

8. Projecteur selon la revendication 1, dans lequel ledit filtre chromatique rotatif (2) comporte ladite région rotative où lesdits segments de filtre servant respectivement à transmettre la lumière blanche et la lumière desdites plusieurs couleurs chromatiques sont agencés, et sépare ladite lumière émise en couleur blanche et lesdites plusieurs couleurs chromatiques, et
dans lequel lesdites plusieurs couleurs chromatiques sont rouge, vert et bleu, et
dans lequel il est possible d'ajuster arbitrairement la brillance dans chacune de ladite couleur blanche et desdites plusieurs couleurs chromatiques.

9. Projecteur selon l'une quelconque des revendications 6 à 8, dans lequel ledit moyen de régulation régule ledit moyen de commande de source de lumière (11, 111) de manière à augmenter la quantité de lumière émise par ladite source de lumière (1, 101) transmise à travers des segments de filtre servant à transmettre la lumière blanche et une lumière dans d'autres couleurs respectives, en augmentant la quantité de lumière émise par ladite source de lumière (1, 101), ou en changeant à la fois une augmentation de la quantité de lumière émise par ladite source de lumière (1, 101) et une période durant laquelle la quantité de lumière émise par ladite source de lumière (1, 101) est augmentée.

10. Projecteur selon l'une quelconque des revendications 1, 2, 6 et 8, dans lequel ledit moyen de régulation régule ledit moyen de commande de source de lumière (11, 111) de manière à changer une augmentation de la quantité de lumière émise par ladite source de lumière (1, 101).

11. Projecteur selon l'une quelconque des revendications 1 à 10, dans lequel ledit moyen de régulation régule ledit moyen de commande de source de lumière (11, 111) de manière à compenser la caractéristique spectrale de ladite source de lumière (1, 101) qui est déséquilibrée durant une période allant de l'allumage de ladite source de lumière (1, 101) à l'obtention d'un état stable.

12. Projecteur selon l'une quelconque des revendications 1 à 10, dans lequel ledit moyen de régulation régule ledit moyen de commande de source de lumière (11, 111) de manière à compenser la quantité de lumière émise par ladite source de lumière (1, 101) qui augmente graduellement durant une période allant de l'allumage de ladite source de lumière (1, 101) à l'obtention d'un état stable.
